# EUROPÄISCHE PATENTSCHRIFT

(11) **EP 4 086 477 B1**
(45) Veröffentlichungstag und Bekanntmachung des Hinweises auf die Patenterteilung: **29.10.2025**
(21) Anmeldenummer: 22170003.2
(22) Anmeldetag: 26.04.2022
(51) Int. Cl.: F16H 25/06

(54) **GETRIEBE**
TRANSMISSION
BOÎTE DE VITESSES

(30) Priorität: 03.05.2021 DE 102021111364
(43) Veröffentlichungstag der Anmeldung: 09.11.2022
(73) Patentinhaber: WITTENSTEIN SE, 97999 Igersheim (DE)
(72) Erfinder: Schreiber, Heiko, 02692 Doberschau (DE)
(74) Vertreter: Zimmermann & Partner Patentanwälte mbB

(56) Entgegenhaltungen:
- DE-A1- 102007 016 189
- DE-A1- 102015 105 523

## Beschreibung

### Gebiet der Erfindung

Die Erfindung betrifft ein Getriebe, eine Verwendung eines Getriebes.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in eine Verzahnung ein, sodass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen.

Ein kritischer Punkt dieser Getriebe ist die axiale Lagerung der Lagersegmente. Es ist bekannt, seitlich der Lagersegmente Anlaufscheiben einzusetzen, ein Beispiel eines solchen Getriebes ist in der DE 10 2015 105 520 A1 gezeigt. Allerdings kann unerwünschter Verschleiß auftreten.

Die DE 10 2015 105 523 A1 zeigt Lagersegmente mit mittig angeordneten Wulsten, wobei in Umfangsrichtung vor und hinter den Wulsten Ausnehmungen bzw. Nasen vorhanden sind.

Die DE 10 2007 016 189 A1 zeigt verschiedene Versionen gattungsgemäßer Getriebe.

### Offenbarung der Erfindung

Aufgabe der Erfindung ist es, Getriebe anzugeben, welche gegenüber aus dem Stand der Technik bekannten Getrieben verbessert sind, wobei ein verringerter Verschleiß oder eine einfache Montage erreicht werden sollen.

Die Aufgabe wird mit einem Getriebe nach dem Anspruch 1 und einer Verwendung eines Getriebes nach dem nebengeordneten Anspruch gelöst. Vorteilhafte Weiterbildungen und Ausführungsformen ergeben sich aus den Unteransprüchen.

Ein Aspekt der Erfindung betrifft ein Getriebe, insbesondere Koaxialgetriebe oder Lineargetriebe, mit einer Verzahnung, einem Zahnträger, in welchem eine Mehrzahl von Zähnen zum Eingriff mit der Verzahnung aufgenommen sind, wobei die Zähne relativ zu dem Zahnträger radial verschieblich gelagert sind, einem Antriebselement mit einer Profilierung zum radialen Antrieb der radial verschieblich gelagerten Zähne, und Lagersegmenten zur Lagerung der Zähne auf der Profilierung, wobei jedes der Lagersegmente umfasst: eine in Richtung der Profilierung ausgerichtete Laufseite und eine der Laufseite gegenüberliegende Lagerseite, einem auf der Lagerseite angeordneten Zahnlager zur gelenkigen Lagerung von mindestens einem der Zähne, wobei das Zahnlager einen zylinderabschnitt-förmigen Wulst umfasst, der eine erste und/oder zweite Ausnehmung aufweist, welcher in einer Richtung quer zu einer Laufrichtung des Lagersegments von einer ersten Seitenkante zu einer zweiten Seitenkante des Lagersegments angeordnet ist, und wobei der Wulst in einem mittleren Bereich zwischen der ersten Seitenkante und der zweiten Seitenkante angeordnet ist und auf einer ersten Seite des mittleren Bereichs die erste Ausnehmung aufweist und/oder auf einer zweiten Seite des mittleren Bereichs die zweite Ausnehmung aufweist.

Typischerweise ist das Zahnlager gelenkig um eine Achse quer zur Laufrichtung des Lagersegments ausgerichtet. Das Lagersegment weist insbesondere eine Laufrichtung in Umlaufrichtung des Getriebes auf. Bei typischen Ausführungsformen ist der Wulst zumindest im Wesentlichen mittig zwischen Vorder- und Hinterkante des Lagersegments angeordnet. Typische Wülste von Ausführungsformen reichen nicht über die vollständige Länge von einer Seitenkante zu einer anderen Seitenkante der Lagersegmente. Bei weiteren Ausführungsformen reicht der Wulst bis an beide Seitenkanten heran. Typischerweise sind beidseits eines mittleren Bereichs des Wulstes Ausnehmungen vorgesehen. Bei typischen Ausführungsformen kann in dem mittleren Bereich des Wulstes zumindest eine Ausnehmung oder es können beispielsweise zwei Ausnehmungen vorhanden sein.

Ein weiterer Aspekt der Erfindung betrifft eine Verwendung eines Getriebes in einer der typischen Ausführungsformen.

Erfindungsgemäß wird ein Haltering auf den Zahn im Bereich der Zahnbasis des Zahnes aufgepresst, welcher die Zahnbasis des jeweiligen Zahns zumindest teilweise umschließt, wobei der Haltering allein oder zumindest teilweise durch die Presspassung am Zahn befestigt ist. Der Zahn ist typischerweise zumindest in einem Bereich eines Zahnrumpfes zumindest im Wesentlichen als Rundzahn ausgebildet. Der Zahn weist erfindungsgemäß an der Zahnbasis die mindestens eine Ausnehmung zum Eingriff mit dem Wulst des Lagersegments auf, wobei der Wulst ein Verschwenken des Zahns relativ zum Lagersegment zulässt, wobei der Zahn das Lagersegment jedoch in Umfangsrichtung auf seiner Position gegenüber dem Zahn hält. Das Lagersegment kann bei Ausführungsformen auch als Schwenksegment bezeichnet werden.

Unter dem Begriff zylinderabschnittsförmig wird typischerweise ein Winkelabschnitt einer Mantelfläche eines Kreiszylinders angesehen. Bei exemplarischen Ausführungsformen umfasst der Winkelabschnitt minimal 50° oder maximal 200°.

Im Lagersegment werden Ausnehmungen, insbesondere in den Wulst, eingebracht, wobei der Haltering in die Ausnehmungen eingreift. Sollten am Lagersegment in axialer Richtung Kräfte angreifen, beispielsweise aus einer Wälzlagerung des Lagersegments, erfolgt eine Abstützung des Lagersegments am Haltering in axialer Richtung. Der Haltering wird wiederum durch den Zahn in axialer Richtung abgestützt. Der Zahn ist im Zahnträger in axialer Richtung unbeweglich und überträgt die Stützkräfte in den Zahnträger. Der Querschnitt des Halterings kann bei Ausführungsformen vergrößert werden, indem ein Absatz an der Zahnbasis des Zahnes vorgesehen wird.

Soweit hierin nicht anders angegeben, beziehen sich Richtungsangaben auf das Getriebe, also beispielsweise ist die axiale Richtung in Richtung der Drehachse des Getriebes ausgerichtet.

Der Zahn umfasst typischerweise ein Zahnkopf, welcher zum Eingriff mit der Verzahnung vorgesehen ist, einen Zwischenteil des Zahns, welcher sich zwischen Zahnkopf und Zahnbasis erstreckt, und eine Zahnbasis, die auch als Zahnfuß bezeichnet werden kann, welche zur Abstützung auf dem Zahnlager des Lagersegment vorgesehen ist. Typischerweise liegen Zahnbasis und Zahnkopf an unterschiedlichen Enden des Zahns. Typischerweise kann die Zahnbasis am Zahnlager des Lagersegments anliegen.

Ausführungsformen der Erfindung betreffen insbesondere Koaxialgetriebe. Üblicherweise umfassen Getriebe der Erfindung eine innenliegende Kurvenscheibe mit einer Profilierung als Antriebselement und ein Hohlrad mit einer innenliegenden Verzahnung oder ein außenliegendes Antriebselement mit innerer Profilierung und ein innenliegendes Zahnrad oder eine innenliegende Zahnstange, welche für den Fall des außenliegenden Antriebselementes die Verzahnung stellt. Konfigurationen von Ausführungsformen betreffen Lineargetriebe zur Umsetzung einer Rotation in eine Linearbewegung.

Die Verzahnung ist typischerweise eine umlaufende Verzahnung. In die Verzahnung greifen die Zähne oder die Zahnköpfe der Zähne ein, wobei die Zähne typischerweise linear radial verschieblich relativ zu dem Zahnträger gelagert sind. Dabei bedeutet "linear radial" üblicherweise, dass eine Führung in radialer Richtung vorliegt, welche lediglich eine Bewegung des Zahnes in radialer Richtung zulässt. Typischerweise lässt sich durch die Führung das Zahnsegment in genau einer Richtung linear verschieben, dies kann beispielsweise dadurch erreicht werden, dass der Zahn über eine bestimmte Streckenlänge einen gleichbleibenden Querschnitt in Verschieberichtung aufweist, wobei der Zahnträger ebenfalls eine Öffnung für das Zahnsegment mit gleichbleibendem Querschnitt aufweist. Üblicherweise sind die Zähne in dem Zahnträger jeweils in genau einer Richtung verschieblich gelagert, typischerweise in Richtung der Längsachse des Zahnes. Weiterhin ist bei typischen Ausführungsformen der Rotationsfreiheitsgrad der Zähne relativ zu dem Zahnträger um die Längsachse des Getriebes gesperrt. Dies kann beispielweise mit einer linearen Führung der Zähne in radialer Richtung in dem Zahnträger erreicht werden. Auf diese Weise drehen sich die Zähne mit dem Zahnträger um die Längsachse des Getriebes, allerdings nicht relativ zu dem Zahnträger.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe aus Kunststoff bieten den Vorteil, dass sie ein geringes Gewicht aufweisen. Mit dem Ausdruck "biegesteif" ist insbesondere eine Biegesteifigkeit um eine Querachse des Zahnsegments gemeint. Dies bedeutet insbesondere, dass bei einer Ansicht des Zahnsegments als Balken von einem Zahnfuß zu einem Zahnkopf eine Biegesteifigkeit vorliegt, welche Biegeverformungen zwischen Zahnkopf und Zahnfuß zumindest im Wesentlichen ausschließt. Durch die Biegesteifigkeit wird eine extrem hohe Belastbarkeit und Verdrehsteifigkeit des Getriebes erreicht.

Die Lagersegmente weisen vorzugsweise einander zugewandte Kanten mit Erhebungen und Vertiefungen auf, beispielsweise eine Wellenform oder eine gezackte Form. Dies bietet den Vorteil, dass Nadelrollen, welche unterhalb der Lagersegmente angeordnet sind, auch bei einem größeren Abstand zwischen den Lagersegmenten zuverlässig in dem Raum zwischen den Lagersegmenten und dem Antriebselement gehalten werden. In Ausführungsformen können die Lagersegmente direkt auf der Profilierung der Kurvenscheibe gelagert sein.

Typische Ausführungsformen der Erfindung umfassen ein Antriebselement mit einer Profilierung. Die Profilierung weist vorzugsweise eine nicht-kreisförmige oder eine nicht-ellipsoide Bogenform oder Kurve auf. Im Sinne dieser Anmeldung fallen Exzenter ebenfalls unter kreisförmige oder ellipsoide Formen, da bei Exzentern lediglich die Drehachse nicht der Mittelachse der Kreisform entspricht, gleichwohl jedoch eine Kreisform vorhanden ist. Bei typischen Ausführungsformen sind der Zahnträger oder die Verzahnung kreisförmig ausgebildet. Dies bietet den Vorteil einer einfachen Geometrie für den Zahnträger und die Verzahnung. Typischerweise erfolgt die Kraftübertragung auf der langsamen Seite des Getriebes zwischen der Verzahnung und dem Zahnträger. Dies bietet den Vorteil, dass der Weg für die Kraftübertragung äußerst kurz ist, sodass eine äußerst hohe Steifigkeit erreicht werden kann. Ausführungsformen, welche diese Bedingungen erfüllen, sind in einer nicht abschließenden Ausführung: Getriebe mit innenliegender Kurvenscheibe als Antrieb und außenliegendem Hohlrad mit Verzahnung, wobei der Zahnträger zwischen Hohlrad und Kurvenscheibe angeordnet ist; außenliegende Kurvenscheibe mit innenliegender Profilierung an einem Hohlrad zum Antrieb der radial beweglichen Zähne nach innen gegen eine Verzahnung, welche auf einem Zahnrad oder einer Zahnstange angeordnet ist.

Typischerweise sind bei Ausführungsformen die Lagersegmente relativ zueinander in Umfangsrichtung beweglich. Um diese Beweglichkeit zu erreichen, können die Lagersegmente beispielsweise einen durch die radiale Lage der Zähne bestimmten Abstand zwischen sich aufweisen.

Bei typischen Ausführungsformen sind die Wulste derart ausgebildet, dass die Drehachse des Zahnes auf dem Wulst zumindest im Wesentlichen mit der Laufseite zusammenfällt. Dabei bedeutet "Im Wesentlichen" beispielsweise, dass die Drehachse maximal 50% oder maximal 30% oder maximal 20%, oder maximal 10% des Durchmessers eines Wälzkörpers über oder unter der Laufseite liegt. Bei weiteren Ausführungsformen liegt die Drehachse maximal 20%, 10% oder 5% der maximalen Ausdehnung des Lagersegments in radialer Richtung von der Laufseite entfernt.

Typischerweise weisen Wulste von Ausführungsformen zu den Ausnehmungen hin jeweils seitliche Flanken auf, welche in Umfangsrichtung zumindest abschnittsweise gerade verlaufen oder zumindest abschnittsweise kreisförmig verlaufen. Die Flanke kann auch als Grenzfläche zwischen Wulst und Ausnehmung oder als seitliche Begrenzung des Wulstes verstanden werden. Die Form der Flanke ist typischerweise an eine Form eines Halterings angepasst.

Bei typischen Ausführungsformen ist je Zahn ein Haltering vorgesehen, welcher eine Zahnbasis des jeweiligen Zahns zumindest teilweise umschließt. Bei weiteren Ausführungsform en ist ein Haltering für mindestens zwei Zähne vorgesehen, welcher die Zahnbasis der jeweiligen Zähne zumindest teilweise umschließt. Auf diese Weise kann über den Zahn oder die Zähne mit dem Haltering das Lagersegment in axialer Richtung abgestützt werden. Bei typischen Ausführungsvarianten ist der Haltering aus Stahl, er kann jedoch auch aus vergleichsweise leichterem Kunststoff oder als Blechbiegeteil hergestellt sein. Ein Haltering aus Stahl weist eine hohe Tragfähigkeit auf und ist kostengünstig herzustellen.

Typischerweise ist an einem Außenumfang des Zahns oder der Zähne an der Zahnbasis ein Absatz zur Aufnahme des Halterings vorgesehen. Mit dem Absatz kann der Platzbedarf verringert werden. Typischerweise bildet der Absatz eine Stufe nach innen aus, so dass der Zahn an der Zahnbasis einen verringerten Durchmesser aufweist.

Typische Zähne von Ausführungsformen weisen einen kreisrunden Querschnitt auf. Durch den Haltering in Zusammenspiel mit dem Wulst und der Innenverzahnung kann bei Ausführungsformen auf aufwändige zusätzliche Führungs- oder Abstützelemente zumindest weitgehend verzichtet werden.

Typischerweise ist der Haltering ringförmig ausgeführt. Die Ringform kann abgeflacht oder kreisrund sein. Weitere Halteringe von Ausführungsformen sind eckig, beispielsweise als Viereck ausgebildet oder weisen mehrere ringförmige Abschnitte auf.

Typischerweise ist ein Außenumfang des Halterings abschnittsweise gerade ausgeführt. Beispielsweise kann ein als Kreisring mit Abflachungen am Innenumfang oder am Außenumfang geformter Haltering vorgesehen sein. Mit Abflachungen am Außenumfang können Kollisionen zwischen benachbarten Halteringen vermieden werden.

Bei typischen Ausführungsformen ist auf der Lagerseite des Lagersegments zwischen der ersten Ausnehmung und der ersten Seitenkante ein erster Anschlag ausgebildet oder zwischen der zweiten Ausnehmung und der zweiten Seitenkante ein zweiter Anschlag ausgebildet. Es können zusätzliche Ausnehmungen vorgesehen sein. Die Länge des eines Wulstes zwischen zwei Ausnehmungen beträgt bei typischen Ausführungsformen maximal die Zahnbreite oder den Zahndurchmesser. Bei Ausführungsformen mit zwei auf einem Lagersegment parallel angeordneten Zähnen ist optional noch mindestens eine Ausnehmung oder mindestens ein Anschlag zwischen den Bereichen, in denen die Zähne auf dem jeweiligen Wulst aufliegen, vorgesehen. Typischerweise sind mindestens zwei Ausnehmungen mit mindestens einem Anschlag zwischen den Ausnehmungen, vorgesehen, insbesondere in einem Bereich zwischen den Zähnen. Anschläge von Ausführungsformen können insbesondere durch weitere Wulstabschnitte gebildet werden, beispielsweise zwischen zwei Zähnen oder in einem Bereich zwischen einem einen Zahn lagernden Wulst und der jeweiligen Seitenkante.

Der Haltering kann sich, insbesondere über seinen Außenumfang, an den Anschlägen des Lagersegments abstützen.

Bei Ausführungsform en mit zwei Reihen von Zähnen auf einem Lagersegment kann ein Haltering für zwei Zähne mit zwei Ausnehmungen zum Eingriff der Zähne vorgesehen sein. Der Haltering umgreift einen Wulst des Lagersegments, so dass sich dieses in axialer Richtung über den Haltering an den Zahnsegmenten abstützen kann. Zwischen Zähnen und Haltering kann ein Spiel vorgesehen sein, um Toleranzen beispielsweise im Zahnreihenabstand auszugleichen.

Bei typischen Ausführungsformen sichert der Haltering durch Eingriff in die mindestens eine Ausnehmung, bzw. durch Eingriff mit den Flanken des Wulstes, das jeweilige Lagersegment in seiner Lage quer zur Umlaufrichtung. Typische Ausführungsformen umfassen zwei Ausnehmungen je Zahn. Bei exemplarischen Ausführungsformen entspricht die axiale Länge des Wulstes des Lagersegments maximal einem Innendurchmesser des Halterings. Typischerweise umgreift der Haltering den Wulst oder einen Abschnitt des Wulstes zwischen zwei Ausnehmungen . Typischerweise reichen bei Ausführungsformen die Ausnehmungen zwischen den Zähnen und den jeweiligen Seitenkanten von dem Bereich des Wulstes, welcher den Zahn lagert, bis zu den jeweiligen Seitenkanten, beispielsweise reicht die erste Ausnehmung bis zu der ersten Seitenkante und die zweite Ausnehmung bis zu der zweiten Seitenkante.

Bei Ausführungsformen kann auf einem Lagersegment genau ein Zahn gelagert sein oder es können auf einem Lagersegment genau zwei Zähne gelagert sein. Bei letzteren Ausführungsformen sind die Zähne typischerweise nebeneinander angeordnet und der Wulst weist zumindest eine, typischerweise genau zwei Unterbrechungen auf.

### Kurze Beschreibung der Zeichnungen

Nachfolgend wird die Erfindung anhand der beiliegenden Zeichnungen näher erläutert, wobei die Figuren zeigen:
- Fig. 1: eine erste Ausführungsform eines Getriebes in einer schematischen Schnittansicht;
- Fig. 2: ein Lagersegment und einen Zahn der Ausführungsform der Fig. 1 in einer schematischen Schnittansicht;
- Fig. 3: das Lagersegment der Fig. 2 der Ausführungsform der Fig. 1 mit zwei Zähnen in einer weiteren Schnittansicht;
- Fig. 4: das Lagersegment der Fig. 2 und der Fig. 3 in einer schematischen perspektivischen Ansicht;
- Fig. 5: das Lagersegment der Fig. 2 und der Fig. 3 in einer weiteren schematischen perspektivischen Ansicht;
- Fig. 6: zeigt schematisch eine weitere Ausführungsform eines Lagersegments mit einem Zahn und Haltering in einer schematischen Schnittansicht; und
- Fig. 7: den Haltering der Ausführungsform der Fig. 6 in einer Draufsicht.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

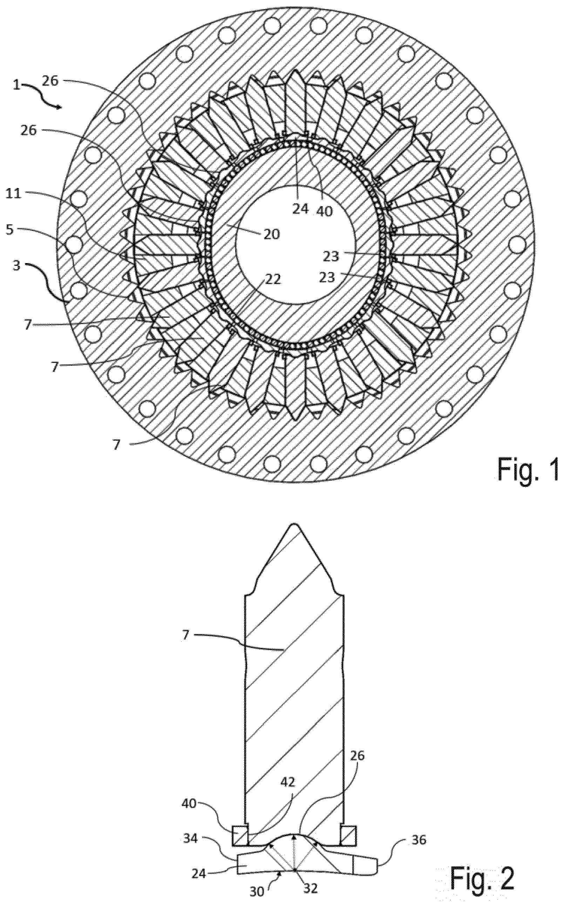

**In** der Fig. 1 ist ein Ausführungsbeispiel in einer schematischen Schnittansicht gezeigt. Die Fig. 1 zeigt in einem Schnitt schematisch ein Getriebe 1, welches ein Hohlrad 3 mit einer innen liegenden, um laufenden Verzahnung 5 aufweist. In die Verzahnung 5 greifen Zähne 7 ein. Zur besseren Übersichtlichkeit ist nicht jeder Zahn 7 der Fig. 1 auch mit dem Bezugszeichen 7 versehen. Typischerweise sind zwei axial parallele Zahnkränze mit einzelnen Zähnen 7 vorgesehen. Die Zähne 7 sind in einem Zahnträger 11 radial verschieblich gelagert. Hierzu weist der Zahnträger 11 radial ausgerichtete kanalartige runde oder schlitzartige Öffnungen auf, welche eine radiale Führung der Zähne 7 in dem Zahnträger 11 gewährleisten. Aufgrund der radialen Führung in den Öffnungen ist es für die Zähne 7 lediglich möglich, sich in radialer Richtung entlang ihrer Längsachse zu bewegen, insbesondere ist eine Verdrehung um eine Längsachse des Getriebes 1 relativ zu dem Zahnträger 11 ausgeschlossen.

Die Längsachse der Zähne bezeichnet typischerweise die vom Zahnfuß zum Zahnkopf verlaufende Achse, während die Längsachse des Getriebes in Richtung der Drehachse des Getriebes zeigt. Dies kann beispielsweise die Drehachse des als Abtrieb verwendbaren Zahnträgers sein oder auch die Drehachse einer Kurvenscheibe.

Die Zähne 7 werden durch eine Kurvenscheibe 20 angetrieben, welche als hohle Kurvenscheibe 20 ausgeführt ist. Die Kurvenscheibe 20 weist eine Profilierung 22 auf, um die Zähne 7 in radialer Richtung anzutreiben. Die Profilierung 22 weist einen Verlauf mit zwei Erhebungen über den Umfang auf, sodass es gegenüberliegende Zähne 7 gibt, die in der Darstellung am weitesten in Zahnlücken der Verzahnung 5 eingetreten sind.

Die Zähne 7 sind bei dem in Fig. 1 dargestellten Getriebe 1 mit einer Wälzlagerung auf der Profilierung des Antriebselements angeordnet. Die Wälzlagerung umfasst Wälzkörper 23, welche bei diesem Ausführungsbeispiel als Nadelrollen ausgeführt sind.

Bei dem Ausführungsbeispiel der Fig. 1 ist die Kurvenscheibe innen angeordnet und die Verzahnung außen angeordnet. Bei einer solchen Konfiguration wird z.B. der Abtrieb an dem Hohlrad mit der Verzahnung oder an dem Zahnträger abgegriffen, wobei das jeweils andere Element festgelegt wird. Bei weiteren Ausführungsform en ist das Antriebselement außen, d.h. außerhalb des Zahnträgers, angeordnet und die Verzahnung innen angeordnet. Wiederum ist es möglich, den Abtrieb an der inneren Verzahnung oder an dem Zahnträger abzugreifen. Ein Vertauschen der Funktion von Antrieb und Abtrieb ist bei typischen Ausführungsformen möglich. Der Zahnträger kann auch mit seinen Öffnungen als Zahnkäfig bezeichnet werden, in welchem Zähne radial linear geführt verschieblich aufgenommen sind.

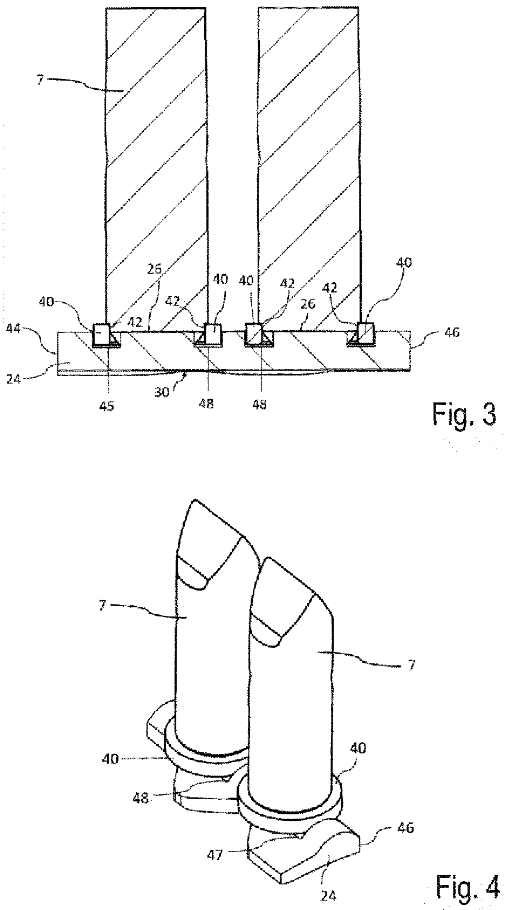

Das Getriebe 1 umfasst eine segmentierte Lagerung für die Zähne 7. Die segmentierte Lagerung umfasst Lagersegmente 24, welche jeweils auf der dem Zahn 7 zugewandten Lagerseite einen zum indest im Wesentlichen zylinderabschnittsförmigen Wulst 26 bilden, auf dem der Fuß zweier Zähne 7 (siehe Fig. 3) oder bei typischen Ausführungsformen ein, drei oder vier Zähne in axialer Richtung des Getriebes 1 nebeneinander angeordnet sein können. Der Wulst 26 verhindert zusammen mit einer entsprechenden Ausnehmung im Zahnfuß des jeweiligen Zahnes 7 ein Verrutschen des Zahnes 7 auf dem Lagersegment 24 in Umfangsrichtung.

Mit den Wulsten 26 werden jeweils Fußgelenke für die Zähne 7 ausgebildet, sodass sich die Zähne 7 relativ zu den Lagersegmenten 24 verkippen können, um eine zwangsfreie Führung zu gewährleisten. Die Lagersegmente 24 sind relativ zueinander in Umlaufrichtung verschieblich, sodass sich die Abstände zwischen den Lagersegmenten 24 verändern lassen. Auf diese Weise ist auch der Freiheitsgrad in Umlaufrichtung der Lagersegmente 24 nicht gesperrt. Dies ermöglicht eine weitgehend zwangsfreie Führung und einen weitgehend zwangsfreien radialen Antrieb der Lagersegmente 24 durch die Profilierung 22 der Kurvenscheibe 20. Für eine Minimierung des Reibungswiderstandes zwischen der Profilierung 22 und den Lagersegmenten 24 sind die Wälzkörper 23 als Nadelrollen vorgesehen. Bei weiteren Ausführungsformen sind Kugeln oder andere Wälzlager zur Lagerung von Lagersegmenten vorgesehen. In anderen Ausführungsformen kann eine Gleitlagerung zwischen der Profilierung 22 und den Lagersegmenten 24 vorgesehen sein.

Die Figuren 1, 2 und 3 werden zusammenhängend beschrieben, wobei nicht alle Einzelheiten nochmals erläutert werden und Bezugszeichen für gleiche Teile identisch verwendet werden.

In der Fig. 2 ist ein Lagersegment 24 des Getriebes 1 der Fig. 1 dargestellt. Das Lagersegment 24 umfasst einen Wulst 26 auf der im Getriebe 1 einem Zahn 7 zugewandten Seite des Lagersegments 24. Der runde Flächenabschnitt des Wulstes 26 ist dabei kreisrund ausgestaltet. Der Mittelpunkt des Kreises fällt mit einer Laufseite 30 des Lagersegments 24 zusammen. Dadurch wird für die Zähne 7, welche auf den Lagersegmenten 24 gelagert sind, jeweils eine Drehachse 32 geschaffen, welche mit der Laufseite 30 zusammenfällt. Auf diese Weise werden die Zähne 7 jeweils auf einem Lagersegment gelenkig gelagert.

Die Laufseite 30 ist dabei die dem Zahn abgewandte Seite des Lagersegments 24, also die Seite, welche dem Wälzkörper 23 oder auch der Kurvenscheibe 20 zugewandt ist. Die Laufseite 30 entspricht der Fläche, auf welcher die Wälzkörper 23 abrollen.

Das Lagersegment 24 umfasst eine Vorderkante 34 und eine Hinterkante 36. Dabei sind die Bezeichnungen "vordere" und "hintere" nicht im Sinne einer Bewegung gemeint, vielmehr bezeichnen diese zwei in Umlaufrichtung gegenüberliegende Seiten des Lagersegments 24. Typische Getriebe sind in zwei Richtungen betreibbar, sodass bei einem Betrieb auch die vordere Segmentkante in Bewegungsrichtung beim Umlauf hinten sein kann und dementsprechend die hintere Segmentkante vorne.

Um einen Fuß oder an einer Zahnbasis des Zahnes 7 ist ein umlaufender Absatz 42 vorgesehen, welcher von einem Haltering 40 umfasst ist. Die Halteringe werden im Zusammenhang mit der Fig. 3 detaillierter beschrieben.

In der Fig. 3 ist eine weitere Schnittansicht des Lagersegments 24 mit den Zähnen 7 der Ausführungsform der Fig. 2 gezeigt, wobei zusätzlich noch Einzelheiten des Getriebes 1 gezeigt sind. Die Fig. 3 wird im Zusammenhang mit den Figuren 1 und 2 beschrieben, da jeweils die gleichen Teile dargestellt sind, wenngleich auch in der Fig. 3 Einzelheiten gezeigt sind, welche in der Fig. 1 und in der Fig. 2 nicht gezeigt sind.

Die Halteringe 40 verhindern eine Verschiebung der Zähne 7 in axialer Richtung des Getriebes, also in einer Richtung entlang des Wulstes 26. Der Wulst 26 verläuft in einer Richtung quer zu einer Laufrichtung des Lagersegments 24 von einer ersten Seitenkante 44 zu einer zweiten Seitenkante 46 des Lagersegments 24 und zumindest im Wesentlichen mittig zwischen der Vorderkante und Hinterkante des Lagersegments.

Der Wulst 26 ist in einem mittleren Bereich zwischen der ersten Seitenkante 44 und der zweiten Seitenkante 46 angeordnet. Auf einer ersten Seite des mittleren Bereichs weist der Wulst eine erste Ausnehmung 45 auf und auf einer zweiten Seite des mittleren Bereichs weist der Wulst 26 eine zweite Ausnehmung 47 auf. Außerdem weist der Wulst 26 noch zwei weitere Ausnehmungen 48 auf, welche etwa mittig zwischen der ersten Ausnehmung 45 und der zweiten Ausnehmung 47 angeordnet sind. Die weiteren Ausnehmungen 48 können daher auch als Unterbrechungen des Wulstes bezeichnet werden.

Alle Ausnehmungen 45, 47 und 48 liegen jeweils etwa unterhalb eines Umfangs eines Absatzes 42 der Zähne 7. Auf diese Weise werden durch Flanken an den Ausnehmungen 45, 47 und 48 des Wulstes 26 Widerlager für die Halteringe 40 in axialer Richtung geschaffen.

Mit Ausführungsformen können die Lagersegmente in axialer Richtung durch die in dem Zahnträger geführten Zähne gehalten werden. So können seitliche Anlaufringe oder ähnliches für die Lagersegmente unter Umständen unnötig werden.

Die zu den Ausnehmungen 45, 47 und 48 hin angeordneten Flanken verlaufen zumindest abschnittsweise kreisförmig, so dass sie dem Außenumfang des kreisförmigen Halterings 40 angepasst sind. Diese können auch als Anschläge, insbesondere für den Haltering, angesehen werden. Je Zahn 7 ist typischerweise ein Haltering vorgesehen, welcher die Zahnbasis des jeweiligen Zahns 7 am kreisrunden Absatz 42 zumindest teilweise umschließt.

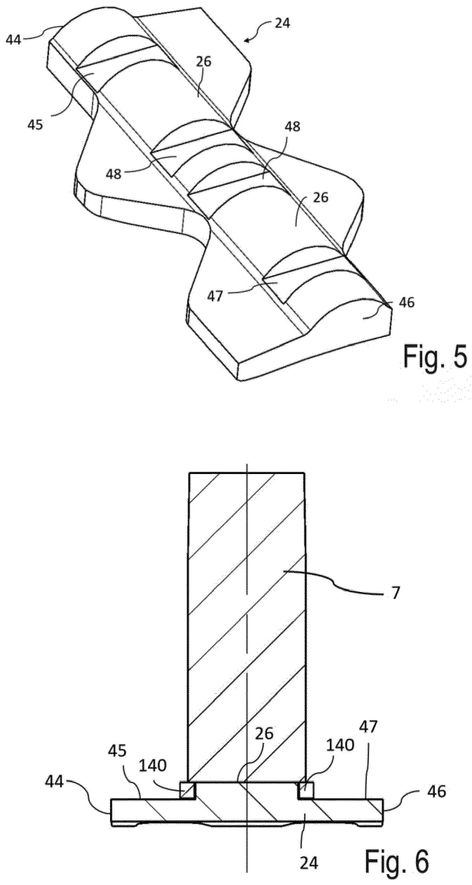

Die Fig. 4 und die Fig. 5 zeigen das Lagersegment der Fig. 2 und der Fig. 3 in schematischen perspektivischen Ansichten.

Die Fig. 6 zeigt eine weitere Ausführungsform eines Lagersegments 24 mit genau einem auf dem Lagersegment 24 gelagerten Zahn 7, welcher durch eine alternative Ausführungsform eines Halterings 140 gehalten wird.

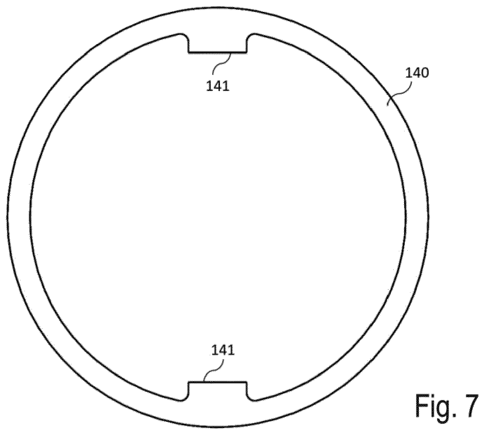

Der Haltering 140 ist in der Fig. 7 nochmals in einer Draufsicht gezeigt. Der Haltering 140 weist nach innen gerichtete Nasen 141 auf, welche den Wulst 26 bzw. dessen seitlichen Flanken stützen. Der Schnitt der Schnittansicht der Fig. 6 verläuft durch die Nasen 141.

Der Haltering 140 greift in anderen Bereichen als dem in dem Schnitt in der Fig. 6 gezeigten Bereich um eine Zahnbasis des Zahns 7. Zu berücksichtigen ist, dass der Zahn 7 im Bereich der Zahnbasis eine Ausnehmung zum Eingriff mit dem Wulst 26 aufweist.

Bei der Ausführungsform der Fig. 6 und der Fig. 7 können die Ausnehmungen 45 und 47 bis zu den Seitenkanten 44, 46 des Lagersegments 24 reichen. Bei weiteren Ausführungsformen können zusätzliche Anschläge in dem Bereich zwischen Wulst 26 und Seitenkanten 44, 46 angeordnet sein. Das Getriebe 1 der Fig. 1 kann auch mit dem Lagersegment 24 der Figuren 6 und 7 betrieben werden.

Die Erfindung ist nicht auf zuvor beschriebene Ausführungsformen beschränkt, vielmehr wird der Umfang der Erfindung durch die beigefügten Ansprüche bestimmt.

## Patentansprüche

1. Getriebe (1), insbesondere Koaxialgetriebe oder Lineargetriebe, mit
- einer Verzahnung (5),
- einem Zahnträger (11), in welchem eine Mehrzahl von Zähnen (7) zum Eingriff mit der Verzahnung aufgenommen sind, wobei die Zähne (7) relativ zu dem Zahnträger (11) radial verschieblich gelagert sind,
- einem Antriebselement mit einer Profilierung (22) zum radialen Antrieb der radial verschieblich gelagerten Zähne (7), und
- Lagersegmenten (24) zur Lagerung der Zähne auf der Profilierung, wobei jedes der Lagersegmente umfasst:
- eine in Richtung der Profilierung ausgerichtete Laufseite und eine der Laufseite gegenüberliegende Lagerseite,
- einem auf der Lagerseite angeordneten Zahnlager zur gelenkigen Lagerung von mindestens einem der Zähne,
- wobei das Zahnlager einen zylinderabschnitt-förmigen Wulst, der eine erste und/oder zweite Ausnehmung aufweist, umfasst, welcher in einer Richtung quer zu einer Laufrichtung des Lagersegments von einer ersten Seitenkante zu einer zweiten Seitenkante des Lagersegments angeordnet ist, und
- wobei der Wulst in einem mittleren Bereich zwischen der ersten Seitenkante und der zweiten Seitenkante angeordnet ist und auf einer ersten Seite des mittleren Bereichs die erste Ausnehmung aufweist und/oder auf einer zweiten Seite des mittleren Bereichs die zweite Ausnehmung aufweist,
- und wobei je Zahn (7) ein Haltering (40) vorgesehen ist, welcher eine Zahnbasis des jeweiligen Zahns (7) zumindest teilweise umschließt und welcher durch Eingriff in die mindestens eine Ausnehmung das jeweilige Lagersegment (24) in seiner Lage quer zur Umlaufrichtung sichert.

2. Getriebe nach Anspruch 1, wobei der Wulst zu den Ausnehmungen hin jeweils seitliche Flanken aufweist, welche in Umfangsrichtung zumindest abschnittsweise gerade verlaufen und/oder zumindest abschnittsweise kreisförmig verlaufen.

3. Getriebe nach Anspruch 1 oder 2, wobei an einem Außenumfang des Zahns (7) an der Zahnbasis ein Absatz (42) zur Aufnahme des Halterings (40) vorgesehen ist.

4. Getriebe nach einem der vorhergehenden Ansprüche, wobei die Zähne einen kreisrunden Querschnitt aufweisen.

5. Getriebe nach einem der vorhergehenden Ansprüche, wobei der Haltering ringförmig ist.

6. Getriebe nach einem der vorhergehenden Ansprüche, wobei ein Außenumfang des Halterings abschnittsweise gerade ausgeführt ist.

7. Getriebe nach einem der vorhergehenden Ansprüche, wobei auf der Lagerseite des Lagersegments zwischen der ersten Ausnehmung und der ersten Seitenkante ein erster Anschlag ausgebildet ist und/oder zwischen der zweiten Ausnehmung und der zweiten Seitenkante ein zweiter Anschlag ausgebildet ist.

8. Getriebe nach einem der Ansprüche 1 bis 6, wobei der Haltering über den Wulst und/oder durch die Anschläge das Lagersegment in seiner Lage quer zur Umlaufrichtung sichert.

9. Getriebe nach einem der vorhergehenden Ansprüche, wobei die erste Ausnehmung bis zu der ersten Seitenkante reicht und die zweite Ausnehmung bis zu der zweiten Seitenkante reicht.

10. Getriebe nach einem der vorhergehenden Ansprüche, wobei auf einem Lagersegment genau ein Zahn gelagert ist oder auf einem Lagersegment genau zwei Zähne gelagert sind.

11. Verwendung eines Getriebes nach einem der vorhergehenden Ansprüche.

## Claims

1. Gear mechanism (1), in particular coaxial gear mechanism or linear gear mechanism, comprising
- a toothing (5),
- a tooth carrier (11) in which a plurality of teeth (7) for engaging with the toothing are received, wherein the teeth (7) are mounted so as to be radially movable in relation to the tooth carrier (11),
- a drive element with a profile (22) for radially driving the radially movable mounted teeth (7), and
- bearing segments (24) for the mounting of the teeth on the profile, wherein each of the bearing segments comprises:
- a running side aligned in the direction of the profile and a bearing side opposite the running side,
- a tooth bearing arranged on the bearing side for the articulated mounting of at least one of the teeth,
- wherein the tooth bearing comprises a cylindrical-portion-shaped bead which has a first and/or second recess, which bead is arranged in a direction transverse to a running direction of the bearing segment from a first side edge to a second side edge of the bearing segment, and
- wherein the bead is arranged in a central region between the first side edge and the second side edge and has the first recess on a first side of the central region and/or has the second recess on a second side of the central region;
- and wherein a retaining ring (40) is provided for each tooth (7), which retaining ring at least partially encloses a tooth base of the particular tooth (7) and, by engaging in the at least one recess, secures the particular bearing segment (24) in its position transverse to the direction of rotation.

2. Gear mechanism according to claim 1, wherein the bead has lateral flanks towards the recesses, which run at least in portions straight and/or at least in portions circularly in the circumferential direction.

3. Gear mechanism according to claim 1 or 2, wherein a shoulder (42) for receiving the retaining ring (40) is provided on an outer periphery of the tooth (7) at the tooth base.

4. Gear mechanism according to any of the preceding claims, wherein the teeth have a circular cross-section.

5. Gear mechanism according to any of the preceding claims, wherein the retaining ring is annular.

6. Gear mechanism according to any of the preceding claims, wherein an outer circumference of the retaining ring is straight in portions.

7. Gear mechanism according to any of the preceding claims, wherein, on the bearing side of the bearing segment, a first stop is formed between the first recess and the first side edge and/or a second stop is formed between the second recess and the second side edge.

8. Gear mechanism according to any of claims 1 to 6, wherein the retaining ring secures the bearing segment in its position transverse to the direction of rotation via the bead and/or by means of the stops.

9. Gear mechanism according to any of the preceding claims, wherein the first recess extends to the first side edge and the second recess extends to the second side edge.

10. Gear mechanism according to any of the preceding claims, wherein exactly one tooth is mounted on a bearing segment or exactly two teeth are mounted on a bearing segment.

11. Use of a gear mechanism according to any of the preceding claims.

## Revendications

1. Engrenage (1), en particulier engrenage coaxial ou engrenage linéaire, comprenant
- une denture (5),
- un support de dents (11) dans lequel sont logées une pluralité de dents (7) destinées à s'engrener avec la denture, les dents (7) étant montées de manière à pouvoir se déplacer radialement par rapport au support de dents (11),
- un élément d'entraînement muni d'un profilage (22) pour l'entraînement radial des dents (7) montées de manière à pouvoir se déplacer radialement, et
- des segments de palier (24) pour le montage des dents sur le profilage, chacun des segments de palier comprenant :
- un côté de roulement orienté en direction du profilage et un côté de montage opposé au côté de roulement,
- un palier de dent, disposé sur le côté de montage, pour le montage articulé de l'une au moins des dents,
- le palier de dent comprenant un bourrelet en forme de section cylindrique qui présente un premier et/ou un deuxième évidement et qui est disposé dans une direction transversale à une direction de roulement du segment de palier, en allant d'un premier bord latéral à un deuxième bord latéral du segment de palier, et
- le bourrelet étant disposé dans une zone centrale entre le premier bord latéral et le deuxième bord latéral et présentant le premier évidement sur un premier côté de la zone centrale et/ou le deuxième évidement sur un deuxième côté de la zone centrale,
et
- par dent (7) est prévue une bague de retenue (40) qui entoure au moins partiellement une base de dent de la dent respective (7) et qui, par engagement dans ledit au moins un évidement, bloque le segment de palier respectif (24) dans sa position transversalement à la direction circonférentielle.

2. Engrenage selon la revendication 1,
dans lequel le bourrelet présente des flancs latéraux respectifs en direction des évidements, qui s'étendent au moins localement en ligne droite dans la direction circonférentielle et/ou qui s'étendent au moins localement en forme circulaire.

3. Engrenage selon la revendication 1 ou 2,
dans lequel un épaulement (42) destiné à recevoir la bague de retenue (40) est prévu sur un pourtour extérieur de la dent (7) au niveau de la base de la dent.

4. Engrenage selon l'une des revendications précédentes,
dans lequel les dents présentent une section transversale circulaire.

5. Engrenage selon l'une des revendications précédentes,
dans lequel la bague de retenue est de forme annulaire.

6. Engrenage selon l'une des revendications précédentes,
dans lequel un pourtour extérieur de la bague de retenue est localement rectiligne.

7. Engrenage selon l'une des revendications précédentes,
dans lequel une première butée est formée sur le côté de montage du segment de palier entre le premier évidement et le premier bord latéral et/ou une deuxième butée est formée entre le deuxième évidement et le deuxième bord latéral.

8. Engrenage selon l'une des revendications 1 à 6,
dans lequel la bague de retenue bloque le segment de palier dans sa position transversalement à la direction circonférentielle par l'intermédiaire du bourrelet et/ou des butées.

9. Engrenage selon l'une des revendications précédentes,
dans lequel le premier évidement s'étend jusqu'au premier bord latéral et le deuxième évidement s'étend jusqu'au deuxième bord latéral.

10. Engrenage selon l'une des revendications précédentes,
dans lequel exactement une dent est montée sur un segment de palier ou exactement deux dents sont montées sur un segment de palier.

11. Utilisation d'un engrenage selon l'une des revendications précédentes.
